# EUROPEAN PATENT APPLICATION

(11) **EP 4 391 283 A1**
(43) Date of publication of application: **26.06.2024**
(21) Application number: 22892148.2
(22) Date of filing: 14.11.2022
(51) Int. Cl.: H02J 7/00, H02J 3/00, B60L 53/62

(54) **POWER DISTRIBUTION DEVICE AND CHARGING SYSTEM**

(30) Priority: 15.11.2021 CN 202111350580
(71) Applicant: Huawei Digital Power Technologies Co., Ltd., Shenzhen, Guangdong 518043 (CN)
(72) Inventor: DENG, Ziming, Shenzhen, Guangdong 518043 (CN); GUO, Wei, Shenzhen, Guangdong 518043 (CN); REN, Zhanlin, Shenzhen, Guangdong 518043 (CN); RAN, Xiaoke, Shenzhen, Guangdong 518043 (CN)
(74) Representative: Epping - Hermann - Fischer
(86) International application number: PCT/CN2022/131765
(87) International publication number: WO 2023/083355

(57) **Abstract**

A power allocation device (100) includes: a first switch assembly (140), including at least one intermediate output terminal (141-1, ..., and 141-n), where the first switch assembly is configured to output power selectively by using one of the at least one intermediate output terminal (141-1, ..., and 141-n), and the first switch assembly (140) includes at least one of an arc extinguishing switch or a solid-state switch; and a second switch assembly (150), including at least one sub-switch (150-1, ..., and 150-n) respectively corresponding to the at least one intermediate output terminal (141-1, ..., and 141-n), where each sub-switch includes a plurality of power output terminals (151-1, ..., and 151-n), and the second switch assembly (150) is configured to output the power from the intermediate output terminal selectively by using one power output terminal of one of the at least one sub-switch (150-1, ..., and 150-n). A charging system (1000) includes a power supply device and the power allocation device (100) powered by the power supply device. This can reduce costs of the charging system and the power allocation device of the charging system, and have advantages, such as simplicity, reliability, and scalability.

## Description

### TECHNICAL FIELD

The present disclosure mainly relates to the field of charging technologies, and more specifically, to a power allocation device and a charging system including the power allocation device.

### BACKGROUND

In a charging system such as a vehicle charging station, a power conversion device converts power of a public power grid into required power, and a charging terminal outputs the power to a charging object such as an electric vehicle. When a plurality of charging terminals and/or a plurality of power converters are disposed, a power allocation device may be used to distribute the power. For example, in the vehicle charging station, the power allocation device may distribute power of a power converter to a target charging terminal in the plurality of charging terminals by using a switch, to charge a vehicle connected to the target charging terminal.

Because different charging objects or different charging vehicles have specific and different charging requirements, the power allocation device usually needs to ensure that a single power converter is not simultaneously connected to a plurality of different vehicles or a plurality of charging terminals. In addition, the power allocation device further needs to ensure that each power converter can switch to as many charging ports as possible, to improve utilization of the power converter and reliability of the charging system. Therefore, a large quantity of switches are usually disposed in the power allocation device to distribute the required power, resulting in high costs and low efficiency of the power allocation device.

### SUMMARY

To resolve the foregoing problem, embodiments of the present disclosure provide a power allocation device and a charging system including the power allocation device.

According to a first aspect of the present disclosure, a power allocation device is provided. The power allocation device includes: a first switch assembly, including at least one intermediate output terminal, where the first switch assembly is configured to output power selectively by using one of the at least one intermediate output terminal, and the first switch assembly includes at least one of an arc extinguishing switch or a solid-state switch; and a second switch assembly, including at least one sub-switch respectively corresponding to the at least one intermediate output terminal, where each sub-switch includes a plurality of power output terminals, and the second switch assembly is configured to output the power from the intermediate output terminal selectively by using one power output terminal of one of the at least one sub-switch.

In embodiments of the present disclosure, a two-level allocation architecture is used, and a first-level switch assembly provides an electric-arc extinguishing function. Therefore, a quantity of arc extinguishing switches required in the power allocation device is reduced, and system costs are reduced. In addition, in the power allocation device, a large quantity of switches may be saved, thereby reducing costs, improving switch utilization, and making control simpler and more reliable.

In some embodiments of the present disclosure, the at least one sub-switch includes a non-arc-extinguishing multi-contact switch. In this implementation, a low-cost switch may be used in the second switch assembly, thereby reducing system costs.

In some embodiments of the present disclosure, the first switch assembly includes a power input terminal, the at least one intermediate output terminal includes a plurality of intermediate output terminals, and the first switch assembly is further configured to perform a switching operation between the plurality of intermediate output terminals of the first switch assembly, to electrically connect the power input terminal to one of the plurality of intermediate output terminals of the first switch assembly. In this implementation, the first switch assembly may have the plurality of intermediate output terminals. In addition to electric-arc extinguishing, the first switch assembly may further select a first-level channel in the power allocation device. This helps reduce switches required by the power allocation device. In some embodiments of the present disclosure, the second switch assembly is configured to perform a switching operation between the plurality of power output terminals of each sub-switch, to electrically connect each intermediate output terminal of the first switch assembly to one power output terminal of a corresponding sub-switch. In this implementation, the second switch assembly may select a second-level channel in the power allocation device. Therefore, power of a power converter is simply and reliably transmitted to a target charging terminal.

In some embodiments of the present disclosure, the at least one sub-switch is configured to perform the switching operation in an associated manner. In this implementation, control of the second switch assembly may be simplified. In some embodiments of the present disclosure, each of the at least one sub-switch includes a same quantity of power output terminals. In this implementation, control of the second switch assembly may be further simplified. According to a second aspect of the present disclosure, a charging system is provided, including a power supply device. The power allocation device according to the first aspect is powered by the power supply device.

In some embodiments of the present disclosure, the power supply device further includes at least one power converter. The at least one power converter respectively corresponds to at least one power allocation device, and each power converter is coupled to a corresponding power allocation device.

In some embodiments of the present disclosure, the charging system further includes a plurality of charging terminals that are respectively coupled to each power output terminal of at least one sub-switch of each power allocation device. It may be understood that the charging system provided in the second aspect includes the power allocation device according to the first aspect. Therefore, explanations or descriptions of the first aspect are also applicable to the second aspect. In addition, for beneficial effects that can be achieved in the second aspect, refer to the beneficial effects of the first aspect. Details are not described herein again.

It is clearer and easier to understand the foregoing and other aspects of the present invention in descriptions of the following (plurality of) embodiments.

### BRIEF DESCRIPTION OF DRAWINGS

The foregoing and other features, advantages, and aspects of embodiments of the present disclosure become more obvious with reference to the accompanying drawings and with reference to the following detailed descriptions. In the accompanying drawings, same or similar reference numerals represent same or similar elements.
FIG. 1 is a schematic circuit diagram of a charging system according to an embodiment of the present disclosure;
FIG. 2 is a schematic circuit diagram of a charging system according to another embodiment of the present disclosure;
FIG. 3 is a schematic circuit diagram of a charging system according to still another embodiment of the present disclosure; and
FIG. 4 is a schematic circuit diagram of a charging system according to yet another embodiment of the present disclosure.

### DESCRIPTION OF EMBODIMENTS

The following describes embodiments of the present disclosure in detail with reference to the accompanying drawings. Although some embodiments of the present disclosure are shown in the accompanying drawings, it should be understood that the present disclosure may be implemented in various forms, and should not be construed as being limited to the embodiments described herein. On the contrary, these embodiments are provided so that the present disclosure will be thoroughly and completely understood. It should be understood that the accompanying drawings and embodiments of the present disclosure are only used as examples, but are not intended to limit the protection scope of the present disclosure.

In descriptions of embodiments of the present disclosure, the term "include" and similar terms thereof should be understood as open inclusion, that is, "include but are not limited to". The term "based on" should be understood as "at least partially based on". The terms "one embodiment" or "the embodiment" should be understood as "at least one embodiment". The terms "first", "second", and the like may indicate different or same objects. Other explicit and implicit definitions may also be included below.

As described above, during power allocation, a power allocation device usually needs to meet some requirements, for example, to avoid that each power converter simultaneously outputs power to a plurality of charging terminals and to enable each power converter to switch to as many charging ports as possible. For this purpose, a switch is usually disposed between each power converter and each charging terminal so that each power converter can be connected to any charging terminal or disconnected from any charging terminal. Therefore, a switch array is formed in the power allocation device. It may be learned that in this conventional switch array, a quantity of switches needs to be at least a product of a quantity of power converters and a quantity of charging terminals, and all switches need to have an arc extinguishing capability, so as to completely cut off an electrical connection between a power converter and a charging terminal, thereby ensuring charging safety. For example, when a charging system includes eight power converters and eight charging terminals, the power allocation device needs to provide at least 64 switches with the arc extinguishing capability. Obviously, the quantity of switches in the switch array or in a switch matrix is too large, control is complex, and costs are high. In addition, utilization of the switches in the switch array is very low.

Embodiments of the present disclosure provide an improved power allocation solution. In the improved solution, a two-level power allocation architecture is used. A first-level switch assembly is configured to connect a power converter to a charging channel associated with a target charging terminal or disconnect the power converter from the charging channel associated with the target charging terminal, and a second-level switch assembly is configured to select the target charging terminal from a plurality of charging terminals and switch the charging channel to the target charging terminal. In this manner, only the first-level switch assembly needs to have an electric-arc extinguishing capability. Therefore, only an arc extinguishing switch or a solid-state switch needs to be disposed on a power output path of each power converter, and all the switches do not need to have the electric-arc extinguishing capability, which greatly reduces system costs. In addition, the use of two levels of switch assemblies reduces a large quantity of switches, and the reduction in the quantity of switches not only reduces costs but also makes control of the power allocation device simpler and more reliable.

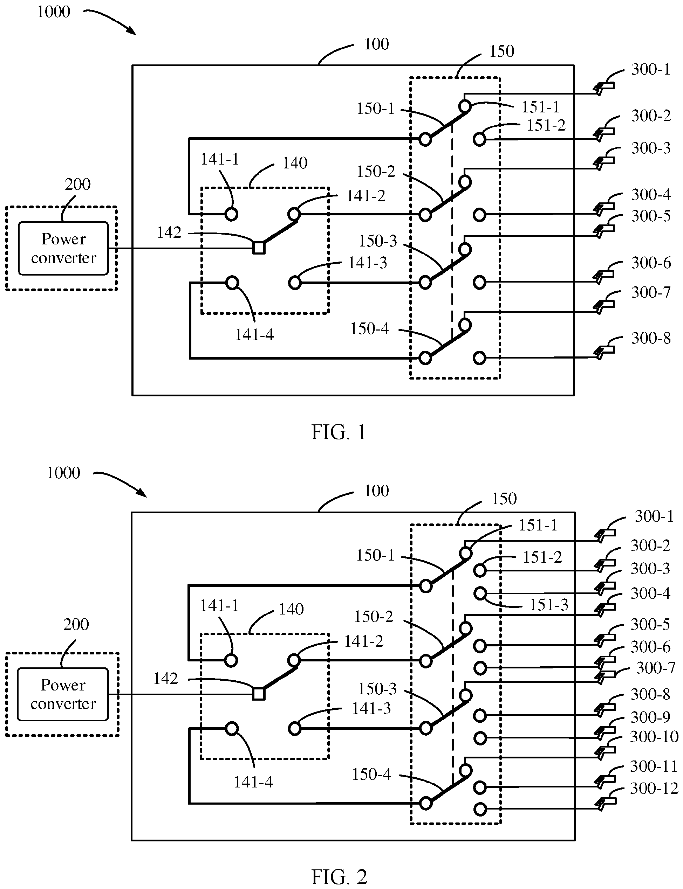

FIG. 1 is a schematic circuit diagram of a charging system 1000 according to an embodiment of the present disclosure. As an example, the charging system 1000 may be a vehicle charging system used to charge an electric vehicle. However, it may be understood that the charging system 1000 may also be used as a charging system of another rechargeable device. As shown in FIG. 1, the charging system 1000 includes a power allocation device 100 and a power supply device. The power supply device may be coupled to the power allocation device 100 to supply power to the power allocation device 100. As an example, the power supply device may be coupled to a power supply, such as a public power grid, to provide power of the power supply to the power allocation device 100 of the charging system 1000. In some embodiments, the power supply device may include a power converter 200. As required, the power converter 200 may include a power converter of a proper type, such as a rectifier, a DC-DC converter, an AC-AC converter, or an inverter, or may include a combination of power converters of a plurality of types to implement power conversion, thereby converting the power of the power supply to power required by the charging system. The power converter 200 may provide converted power to the power allocation device 100 for further power allocation. It may be understood that the power supply device may further include another electrical device required for power supply, such as a transformer, an electrical switch, or another power allocation device. It should be noted that the power supply device may not include the power converter 200. For example, the power supply device may include only a transformer and/or another power allocation device. In this way, the power supply device may directly provide power that is not processed by the power converter to the power allocation device 100. In this case, a power conversion device that implements a function of the power converter 200 may be disposed at another location of the charging system 1000, for example, disposed between the power allocation device 100 and a charging terminal described in detail below, disposed in a charging terminal, or even disposed in a charging vehicle. This may also implement the present invention. The charging system 100 may further include a plurality of charging terminals 300-1, ..., and 300-8. The power allocation device 100 may be coupled to the plurality of charging terminals 300-1, ..., and 300-8, and transmit the power from the power converter 200 to a target charging terminal in the plurality of charging terminals 300-1, ..., and 300-8. It may be understood that a quantity of charging terminals is not limited to the quantity of charging terminals shown inFIG. 1, and another quantity of charging terminals may be set in the charging system 100 based on an actual requirement. It should be noted that although the charging terminals 300-1, ..., and 300-8 in the figure are shown as charging guns, the charging terminals 300-1, ..., and 300-8 may further include a charging terminal of another type, such as a charging pile, suitable for implementing a charging operation, or may include a combination of charging terminals of a plurality of types. For example, some charging terminals are charging piles, and the other charging terminals are charging guns. In addition, any one of the charging terminals 300-1, ..., and 300-8 may further continue to connect to a plurality of additional charging terminals to output power by using the plurality of additional charging terminals. For example, one charging terminal used as a charging pile may be connected to a plurality of charging guns to output power to a charging vehicle by using the plurality of next-stage charging guns.

According to this embodiment of the present disclosure, the power allocation device 100 may include a first switch assembly 140. The first switch assembly 140 includes at least one intermediate output terminal 141-1, ..., and 141-4. The first switch assembly 140 is configured to output power selectively by using one of the at least one intermediate output terminal 141-1, ..., and 141-4, and the first switch assembly 140 includes at least one of an arc extinguishing switch or a solid-state switch. As an example, the first switch assembly 140 may be used as a first-level switch of the power allocation device 100, and can extinguish an electric arc when a disconnection operation is performed, so as to avoid damage caused by the electric arc to the device and avoid a failure of the disconnection operation. For example, the first switch assembly 140 may be a multi-channel switch including an arc extinguishing apparatus. However, the first switch assembly 140 may also be constructed by using a contactor, a circuit breaker, or another electrical switch that can perform an electric-arc extinguishing operation. In addition, the first switch assembly 140 may alternatively be a solid-state switch. The solid-state switch can avoid generating the electric arc when the disconnection operation of a main circuit is performed, thereby also implementing an electric-arc extinguishing function. The solid-state switch includes but is not limited to a power switch device, such as an insulated gate bipolar transistor (Insulated Gate Bipolar Translator, IGBT), a junction-gate field-effect transistor (Junction Field-Effect Transistor, JFET), a bipolar junction transistor (Bipolar Junction Transistor, BJT), a metal-oxide-semiconductor field-effect transistor (Metal-Oxide-Semiconductor Field-Effect Transistor, MOSFET), a gate turn-off thyristor (Gate Turn-Off thyristor, GTO), a MOS-controlled thyristor (MOS-Controlled Thyristor, MCT), an integrated gate-commutated thyristor (Integrated Gate-Commutated Thyristor, IGCT), a silicon carbide (SiC) switch device, or a gallium nitride (GaN) switch device. It should be noted that, although the first switch assembly 140 is shown in a form of a multi-channel switch in FIG. 1, another proper structure may also be used. For example, when a two-terminal sub-switch, such as a solid-state switch, is used, one switch may be disposed for a connection of each intermediate output terminal to implement a same function.

In some embodiments, the first switch assembly 140 includes a power input terminal 142, and the at least one intermediate output terminal 141-1, ..., and 141-4 includes a plurality of intermediate output terminals. For example, there are four intermediate output terminals 141-1, 141-2, 141-3, and 141-4 shown in FIG. 1. The first switch assembly 140 is further configured to perform a switching operation between the plurality of intermediate output terminals 141-1, ..., and 141-4 of the first switch assembly 140, to electrically connect the power input terminal 142 to one of the plurality of intermediate output terminals 141-1, ..., and 141-4 of the first switch assembly 140. As an example, the power input terminal 142 may be connected to the power converter 200 to receive the power from the power converter 200, and the first switch assembly 140 may be controlled to switch between the plurality of intermediate output terminals 141-1, ..., and 141-4, to couple the input terminal 142 to a corresponding intermediate output terminal for power transmission. A quantity of intermediate output terminals may correspond to a quantity of charging channels required in the power allocation device 100, and depends on a quantity of charging terminals and a grouping condition. Therefore, the quantity of intermediate output terminals may be selected as required and may be any other number. The first switch assembly 140 may implement the switching operation in an electrical control manner, or the operation may be performed in a manual manner. For example, when a vehicle charging port is connected to a charging terminal 300-3, based on a signal triggered by a connection between the charging terminal 300-3 and the vehicle charging port or based on an instruction entered by a charging operator, a controller of the charging system 1000 may determine that a charging channel associated with the charging terminal 300-3 needs to be connected to an input port 142. Moreover, after determining that the intermediate output terminal 141-2 corresponds to the charging channel, the controller controls the first switch assembly 140 to connect the input port 142 to the intermediate output terminal 141-2. In addition, the operator may also manually connect the input port 142 to the intermediate output terminal 141-2. It may be understood that an implementation in which the first switch assembly 140 performs the switching operation is not limited thereto, and may be any other manner in which switch control is implemented. For example, the switching operation may be implemented in a remote control manner or may be implemented in a combination of a plurality of manners.

According to this embodiment of the present disclosure, the power allocation device 100 further includes a second switch assembly 150. The second switch assembly 150 includes at least one sub-switch 150-1, ..., and 150-4 respectively corresponding to the at least one intermediate output terminal 141-1, ..., and 141-4. Each sub-switch includes a plurality of power output terminals 151-1 and 151-2, and the second switch assembly 150 is configured to output the power from the intermediate output terminal selectively by using one power output terminal of one of the at least one sub-switch 150-1, ..., and 150-4. As an example, the second switch assembly 150 may be used as a second-level switch in the power allocation device 100, to transmit the power to the target charging terminal. A sub-switch corresponding to an intermediate output terminal of the first switch assembly is disposed in the second switch assembly 150, each sub-switch may include a plurality of power output terminals, and a power output terminal of each sub-switch is respectively connected to a corresponding charging terminal. For example, as shown in FIG. 1, the quantity of intermediate output terminals of the first switch assembly 140 is four. Therefore, four sub-switches are disposed in the second switch assembly 150, and eight charging terminals 300-1, ..., and 300-8 of the charging system 1000 are actually divided into four groups with two charging terminals in each group. A total of two power output terminals 151-1 and 151-2 are disposed in a first sub-switch 150-1, to respectively connect to the charging terminals 300-1 and 300-2 in a first group of charging terminals, and an input terminal of the first sub-switch 150-1 is connected to the intermediate output terminal 141-1 of the first switch assembly 140. A second sub-switch 150-2, a third sub-switch 150-3, and a fourth sub-switch 150-4 are respectively connected to the remaining charging terminals, and to the remaining intermediate output terminals of the first switch assembly 140, in a similar manner. In this manner, the second switch assembly 150 may select a second-level channel to further connect one intermediate output terminal that is connected to the power input terminal 142 to the target charging terminal, thereby charging the charging vehicle. In some embodiments, when the first switch assembly 140 has only one intermediate output terminal, only one sub-switch may be correspondingly disposed in the second switch assembly 150, and the sub-switch has a plurality of power output terminals respectively corresponding to all charging terminals. For example, when there are eight charging terminals, the sub-switch may have eight power output terminals. In this case, the first switch assembly 140 is used to extinguish the electric arc during the disconnection operation instead of selecting a charging channel, and only the second switch assembly 140 is used to select the charging channel. When the first switch assembly 140 has the plurality of intermediate output terminals, the plurality of corresponding sub-switches are disposed in the second switch assembly 150. In this case, in addition to electric-arc extinguishing, the first switch assembly 140 may further switch a plurality of charging channels, that is, select the first-level channel, and select the second-level channel in the second switch assembly 150.

In some embodiments, the second switch assembly 150 is configured to perform the switching operation between the plurality of power output terminals 151-1 and 151-2 of each sub-switch, to electrically connect each intermediate output terminal of the first switch assembly 140 to one power output terminal of a corresponding sub-switch. As an example, the second switch assembly 150 may implement the switching operation in an electrical control manner, or the operation may be performed in a manual manner. For example, when a charging port of the charging vehicle is connected to the charging terminal 300-3, based on a signal triggered by a connection or based on an instruction entered by a charging operator, the controller of the charging system 1000 controls the first switch assembly 140 to connect the input port 142 to the intermediate output terminal 141-2, and further controls the second switch assembly 150 to connect to the sub-switch 150-2 corresponding to the intermediate output terminal 141-2, so as to connect the intermediate output terminal 141-2 to an expected power output terminal. The power output terminal is a power output terminal connected to the charging terminal 300-3. Based on the foregoing operations, the power of the power converter 200 is output by using the power input terminal 142 and the intermediate output terminal 141-2 of the first switch assembly 140 and by using the second sub-switch 150-2, to a vehicle that is charged at the charging terminal 300-3. In addition, the operator may also manually control the switching operation of the second switch assembly 150. It may be understood that, similar to the first switch assembly 140, an implementation in which the second switch assembly 150 performs the switching operation is not limited thereto, and may be any other manner in which switch control is implemented. For example, the switching operation may be implemented in a remote control manner or may be implemented in a combination of a plurality of manners.

In some embodiments, the at least one sub-switch 150-1, ..., and 150-4 in the second switch assembly 150 includes a non-arc-extinguishing multi-contact switch. Because the first switch assembly 140 undertakes an electric-arc extinguishing function during the disconnection operation, an electric-arc problem does not need to be considered for the at least one sub-switch 150-1, ..., and 150-4. It may be learned that, by using the two-level architecture, only the first-level switch assembly may execute the arc extinguishing task. In addition, another switch may use a low-cost non-arc-extinguishing multi-contact switch because there is no electric-arc problem. For example, in the power allocation device 100, the sub-switches 150-1, ..., and 150-4 may be selected as non-arc-extinguishing dual-contact switches, which can reduce costs of the power allocation device.

In some embodiments, the at least one sub-switch 150-1, ..., and 150-4 is configured to perform the switching operation in an associated manner. For example, the sub-switches 150-1, 150-2, 150-3, and 150-4 may be coupled to each other by using a linkage apparatus. Therefore, in the switching operation, no matter which sub-switch is switched, the remaining sub-switches are switched from one power output terminal of each sub-switch to another power output terminal. Because the first switch assembly 140 selectively switches only the power output terminal 142 to one intermediate output terminal (for example, 141-2) and the remaining intermediate output terminals (for example, 141-1, 141-3, and 141-4) are not connected to the power input terminal 142, an operation of another sub-switch unrelated to the target charging terminal does not affect charging. Apparently, in this associated operation manner, switching each sub-switch does not need to be separately controlled, thereby simplifying control of the second switch assembly 150. In some embodiments, each of the at least one sub-switch 150-1, ..., and 150-4 includes a same quantity of power output terminals. Each sub-switch has the same quantity of power output terminals, which helps to ensure that all power output terminals of all sub-switches can be switched when all the sub-switches are operated in an associated manner, without separately controlling a sub-switch, thereby further simplifying control of the second switch assembly 150.

It can be learned from the foregoing description that the power allocation device 100 uses a two-level power allocation architecture of the first switch assembly 140 and the second switch assembly 150. The first switch assembly 140 is responsible for the electric-arc extinguishing task, and the second switch assembly is responsible for switching the charging channel. In other words, in the power allocation device 100, only the first switch assembly 140 needs to have the electric-arc extinguishing function. Compared with this, in a conventional power allocation solution in which one power converter is coupled to eight charging terminals, eight arc extinguishing switches need to be provided. Obviously, the improved power allocation device 100 greatly reduces a quantity of arc extinguishing switches, thereby reducing costs of the power allocation device 100. In addition, the first switch assembly 140 may be further used as a first-level switch to switch and select a plurality of channels, and the second switch assembly 140 is used as a second-level switch to switch a charging terminal corresponding to each channel. In this way, a quantity of required switches can be reduced. For example, as shown in FIG. 1, the power allocation device 100 needs only one multi-channel switch as the first switch assembly 140, and four dual-channel switches as the second switch assembly 150. That is, a total of five switches are required while at least eight switches are required in the conventional solution. As the quantity of switches decreases, the improved power allocation device 100 increases utilization of each switch. This not only reduces costs but also helps maintain performance and life of the switches.

FIG. 2 is a schematic circuit diagram of a charging system 1000 according to another embodiment of the present disclosure. As shown in FIG. 2, in a second switch assembly 150, three power output terminals are disposed for each sub-switch. That is, one more power output terminal is added for each sub-switch, compared with that for each sub-switch in FIG. 1. For example, a first sub-switch 150-1 includes power output terminals 151-1, 151-2, and 151-3 that are respectively connected to charging terminals 300-1, 300-2, and 300-3. Other sub-switches are disposed in a similar manner. A power allocation device 100 in FIG. 2 may provide 12 power output terminals. Therefore, power may be provided for 12 charging terminals 300-1, ..., and 300-12. A remaining part of the power allocation device 100 in FIG. 2 is the same as that of the power allocation device 100 in FIG. 1, and therefore details are not described again.

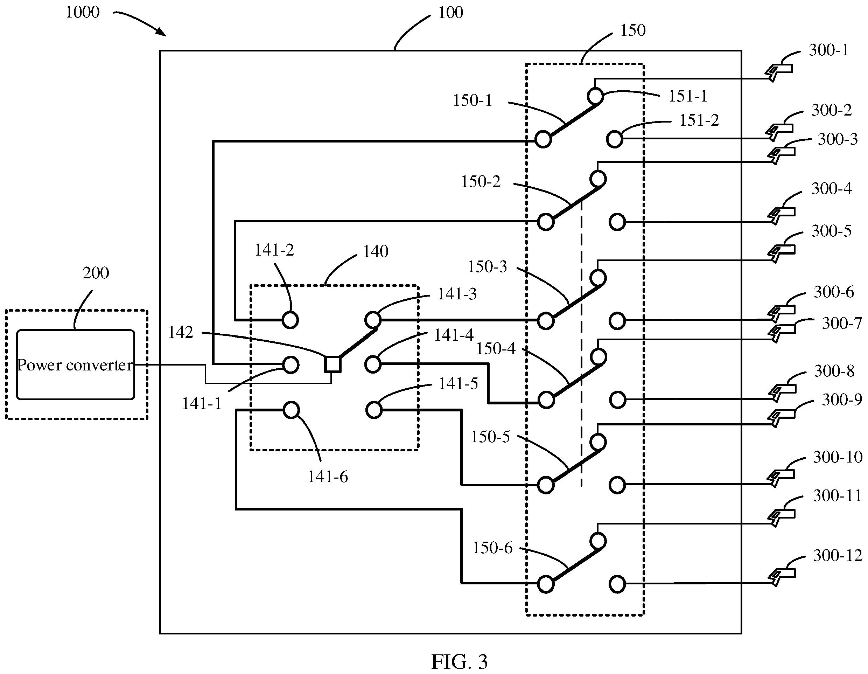

FIG. 3 is a schematic circuit diagram of a charging system 1000 according to still another embodiment of the present disclosure. As shown in FIG. 3, six intermediate output terminals 141-1, ..., and 141-6 are disposed in a first switch assembly 140, and six sub-switches 150-1, ..., and 150-6 are disposed in a second switch assembly 150. That is, two more intermediate output terminals and two more sub-switches are added, compared with those in the power allocation device 100 in FIG. 1. In other words, two more charging channels are added in the power allocation device 100. Therefore, 12 power output terminals may be disposed to provide power for 12 charging terminals 300-1, ..., and 300-12. A remaining part of the power allocation device 100 in FIG. 3 is the same as that of the power allocation device 100 in FIG. 1, and therefore details are not described again.

It can be learned from the two embodiments in FIG. 2 and FIG. 3 that, more charging terminals can be disposed in a charging system only by adding a charging channel or adding a power output terminal of a sub-switch. Therefore, the solution in the present disclosure has great flexibility and scalability.

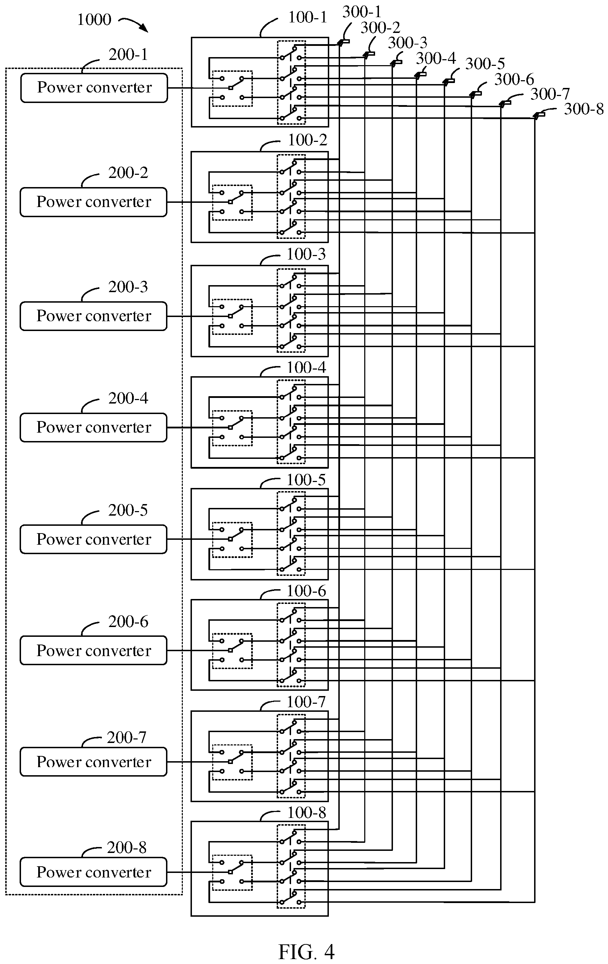

FIG. 4 is a schematic circuit diagram of a charging system 1000 according to yet another embodiment of the present disclosure. As shown in FIG. 4, the charging system 1000 may include a plurality of power converters 200-1, ..., and 200-8 and a plurality of power allocation devices 100-1, ..., and 100-8. Each power allocation device and each power converter is respectively the same as the power allocation device 100 and the power converter 200 shown in FIG. 1. The power converter 200-1 is coupled to a plurality of charging terminals 300-1, ..., and 300-8 by using the power allocation device 100-1, and the remaining power converters 200-2, ..., and 200-8 are also coupled to the plurality of charging terminals 300-1, ..., and 300-8 by using the corresponding power allocation devices 100-2, ..., and 100-8. In this way, the plurality of power converters 200-1, ..., and 200-8 may provide charging power for the plurality of charging terminals 300-1, ..., and 300-8 by using a power allocation device array. In FIG. 4, between eight power converters and eight charging terminals, only eight multi-channel switches are required as a first switch assembly and 32 dual-channel switches are used as sub-switches of a second switch assembly. That is, a total of 40 switches are required, and the eight multi-channel switches need to have an electric-arc extinguishing function (for example, the function is constructed by using an arc extinguishing switch or a solid-state switch). However, in a conventional power allocation solution, at least 64 switches need to be disposed between eight power converters and eight charging terminals, and each of the 64 switches needs to have the electric-arc extinguishing function. Therefore, in the solution of the present disclosure, a quantity of switches required for power allocation between the plurality of power converters and the plurality of charging terminals is reduced. In particular, a quantity of arc extinguishing switches is reduced. Therefore, switch utilization is improved, and system costs are reduced. It may be understood that the quantities of power allocation devices, power converters, and charging terminals shown in FIG. 4 are only examples, and other appropriate quantities of power allocation devices, power converters, and charging terminals may be disposed in the charging system 1000 according to a requirement and a similar principle.

From the teachings given in the foregoing descriptions and the related accompanying drawings, many of the modified forms and other implementations of the present disclosure given herein will be realized by a person skilled in the art related to the present disclosure. Therefore, it is to be understood that implementations of the present disclosure are not limited to the disclosed specific implementations, and modifications and other implementations are intended to fall within the scope of the present disclosure. Further, while the foregoing descriptions and related accompanying drawings describe example implementations in the context of some example combinations of parts and/or functions, it should be noted that different combinations of parts and/or functions may be provided by alternative implementations without departing from the scope of the present disclosure. In this regard, for example, other combinations of parts and/or functions that are different from those explicitly described above are also expected to fall within the scope of the present disclosure. Although specific terms are used here, they are used only in general and descriptive meanings and are not intended to be limited.

## Claims

1. A power allocation device (100), comprising:
a first switch assembly (140), comprising at least one intermediate output terminal (141-1, ..., and 141-n), wherein the first switch assembly is configured to output power selectively by using one of the at least one intermediate output terminal (141-1, ..., and 141-n), and the first switch assembly (140) comprises at least one of an arc extinguishing switch or a solid-state switch; and
a second switch assembly (150), comprising at least one sub-switch (150-1, ..., and 150-n) respectively corresponding to the at least one intermediate output terminal (141-1, ..., and 141-n), wherein each sub-switch comprises a plurality of power output terminals (151-1, ..., and 151-n), and the second switch assembly (150) is configured to output the power from the intermediate output terminal selectively by using one power output terminal of one of the at least one sub-switch (150-1, ..., and 150-n).

2. The power allocation device (100) according to claim 1, wherein the at least one sub-switch (150-1, ..., and 150-n) comprises a non-arc-extinguishing multi-contact switch.

3. The power allocation device (100) according to claim 1, wherein the first switch assembly (140) comprises a power input terminal (142), the at least one intermediate output terminal (141-1, ..., and 141-n) comprises a plurality of intermediate output terminals, and the first switch assembly (140) is further configured to perform a switching operation between the plurality of intermediate output terminals of the first switch assembly (140), to electrically connect the power input terminal (142) to one of the plurality of intermediate output terminals of the first switch assembly (140).

4. The power allocation device (100) according to claim 1, wherein the second switch assembly (150) is configured to perform a switching operation between the plurality of power output terminals (151-1, ..., and 151-n) of each sub-switch, to electrically connect each intermediate output terminal of the first switch assembly (140) to one power output terminal of a corresponding sub-switch.

5. The power allocation device (100) according to claim 4, wherein the at least one sub-switch (150-1, ..., and 150-n) is configured to perform the switching operation in an associated manner.

6. The power allocation device (100) according to claim 5, wherein each of the at least one sub-switch (150-1, ..., and 150-n) comprises a same quantity of power output terminals.

7. A charging system (1000), comprising:
a power supply device, wherein
the power allocation device (100) according to any one of claims 1 to 6 is powered by the power supply device.

8. The charging system (1000) according to claim 7, wherein the power supply device further comprises:
at least one power converter (200-1, ..., and 200-n), wherein the at least one power converter (200-1, ..., and 200-n) respectively corresponds to at least one power allocation device (100-1, ..., and 100-n), and each power converter is coupled to a corresponding power allocation device.

9. The charging system (1000) according to claim 7 or 8, further comprising:
a plurality of charging terminals (300-1, ..., and 300-n) that are coupled to each power output terminal of the at least one sub-switch (150-1, ..., and 150-n) of each power allocation device.
